# EUROPÄISCHE PATENTANMELDUNG

(11) **EP 0 696 859 A1**
(43) Veröffentlichungstag der Anmeldung: **14.02.1996**
(21) Anmeldenummer: 95112216.7
(22) Anmeldetag: 03.08.1995
(51) Int. Cl.: H04B 10/10, G02B 5/20

(54) **Ubertragungssystem mit einer optischen Ubertragungsstrecke im Freiraum**

(30) Priorität: 09.08.1994 AT 1552/94
(71) Anmelder: Siemens Aktiengesellschaft Österreich, A-1210 Wien (AT)
(72) Erfinder: Danzer, Hermann, A-3400 Weidling (AT); Lasser, Othmar, A-1140 Wien (AT); Stath, Norbert, D-93049 Regensburg (DE)
(74) Vertreter: Fuchs, Franz-Josef, Dr.-Ing.

(57) **Zusammenfassung**

Es wird ein Übertragungssystem mit einer optischen Übertragungsstrecke im Freiraum angegeben, bei dem zur Unterdrückung von Umlichtstörungen vor jedes Empfangselement (21) ein Halbleiterfilter (23) eingefügt ist. In einer bevorzugten Ausführungsform werden Sendeelemente (12) mit einer dominanten Wellenlänge von ca. 950 nm verwendet, die Halbleiterfilter sind dabei bevorzugt aus Galliumarsenid, Indiumphosphid, Silizium, oder aus einem ternären oder quaternären Halbleitermaterial aufgebaut.

## Beschreibung

Die Erfindung betrifft ein Übertragungssystem mit einer optischen Übertragungsstrecke im Freiraum welche zumindest jeweils ein Sende- und Empfangselement umfaßt.

Derartige Übertragungssysteme werden beispielsweise in Konferenzräumen zur Übertragung von Audio- und Datensignalen zwischen einer Zentrale und den Teilnehmern im Ein- und Zweirichtungsverkehr verwendet.

Bekannte Übertragungssysteme zur analogen oder digitalen Infrarot-Nachrichtenübertragung im Freiraum, die entweder auf einem Impulsübertragungsverfahren, wie z.B. der Impulsabstandsmodulation oder der Impulsphasenmodulation, oder aber auch auf einem Trägerfrequenzverfahren beruhen, werden durch Umlicht, insbesondere durch Leuchtstofflampen mit elektronischem Vorschaltgerät, empfindlich gestört, da diese Lampen neben dem sichtbaren Licht auch Spektrallinien im Infraroten Bereich von 800 - 1600 nm aussenden, in dem auch diese Übertragungssysteme bevorzugt arbeiten.

Aus der DE 41 37 361 A1 ist eine Anlage zur elektrooptischen Nachrichtenübertragung bekannt, bei der zur Unterdrückung dieser Störungen Sende- und Empfangsdioden mit bestimmten Wellenlängen-Arbeitsbereichen verwendet werden.

Der Erfindung liegt die Aufgabe zugrunde, ein Übertragungssystem anzugeben, welches gegenüber den genannten Störungen weitgehendst unempfindlich ist.

Erfindungsgemäß geschieht dies mit einem Übertragungssystem nach Anspruch1.

Wie Untersuchungen an Leuchtstofflampen ergaben, sind die infraroten Spektrallinien der Füllgase wellenlängenspezifisch unterschiedlich durch die Gasentladung in ihrer Intensität moduliert, wobei sich zeigt, daß bei Unterteilung der Modulationsfrequenzen in einen niederfrequenten Anteil mit Frequenzen kleiner 300 kHz und einen hochfrequenten Anteil mit Frequenzen größer 300 kHz, die Wellenlängen um 900 nm und kleiner 900 nm hauptsächlich hoch-und niederfrequent moduliert sind, während die Wellenlängen über 900 nm bedeutend weniger und dann hauptsächlich niederfrequent moduliert sind.

Herkömmliche Empfangselemente aus Silizium mit Tageslichtfilter haben ihr Empfindlichkeitsmaximum bei 950 nm, empfangen aber auch noch im Bereich 800 - 1100 nm.

Da der Hauptanteil der optischen Störungen im Bereich um und unter 900 nm angesiedelt ist, führt ein Halbleiterfilter mit einer Grenzwellenlänge bei rund 900 nm zu einer wesentlichen Störunterdrückung. Bei Verwendung von Empfangselementen mit zu Silizium unterschiedlichem Empfindlichkeitsmaximum wird dieser Effekt durch ein Halbleiterfilter mit entsprechender Grenzwellenlänge erzielt.

Besonders vorteilhaft ist die Verwendung eines Freiraum-Lasers als Sendeelement, da sich Freiraum-Laser durch besondere Steilheit der Sendeimpulse auszeichnen und dadurch hochmodulierbar sind.

Vorteilhafte Ausgestaltungen der Erfindung sind auch durch die Ansprüche 3 bis 13 gegeben.
So sind bei Einsatz einer Siliziumdiode als Sendeelement ein Halbleiterfilter aus Galliumarsenid mit einer Grenzwellenlänge von 900 nm oder aus Indiumphosphid mit einer Grenzwellenlänge von 925 nm besonders vorteilhaft, da sie für Wellenlängen , welche größer als die jeweilige Grenzwellenlänge sind, praktisch durchsichtig sind, während sie Licht mit einer Wellenlänge unterhalb der Grenzwellenlänge nahezu vollständig absorbieren.

Mit diesen Halbleitermaterialien können daher sehr effektive, richtungsunabhängige Filter aufgebaut werden. Sie verbessern die Störempfindlichkeit einer Übertragungsstrecke insbesondere auch bei Tages- oder Glühlicht.

Bei einer optischen Übertragung mit einer Wellenlänge größer 950 nm, sind neben den erwähnten Materalien Galliumarsenid und Indiumphosphid auch ternäre und quaternäre Verbindungshalbleiter vorteilhaft einsetzbar sind.

Das Halbleiterfilter kann als Plättchen direkt auf die Empfangsdioden geklebt werden und so einfach und kostengünstig hergestellt werden.

Eine weitere Verbesserung der Übertragungseigenschaften wird erzielt, wenn dem Empfangselement eine elektrische Empfangsschaltung nachgeschaltet ist, welche die verbleibenden, hauptsächlich niederfrequenten Störungen unterdrückt.

Bei einem Impuls-Übertragungssystem ist es dabei vorteilhaft, wenn die Impulse sehr schmal und steil sind, um durch den Hochpaß nur wenig geschwächt zu werden, bzw. bei einem trägerfrequenten Übertragungssytem, wenn die Trägerfrequenz höher als die Grenzfrequenz des elektrischen Hochpasses ist.

Die durch diese optische und elektrische Filterung erreichte Störfestigkeit kann weiters wesentlich verbessert werden durch eine Verstärkungsregelung einer nachgeschalteten elektrischenVerstärkeranordnung.

Da im allgemeinen Nutz- und Störlicht aus derselben Richtung kommen (im allgemeinen werden Infrarotsender und Leuchtstofflampen an der Raumdecke angebracht) ist bei großem Störlichteinfall auch das Nutzsignal groß, daher kann der Empfänger in seiner Empfindlichkeit zurückgeregelt werden, wodurch er gegen das Störlicht unempfindlicher wird.

Die Erfindung wird anhand zweier Figuren näher erläutert:
Es zeigen beispielhaft:
Fig.1 das Blockschaltbild eines Übertragungssystems und
Fig.2 das Blockschaltbild einer Empfangsschaltung für ein Impulsübertragungssystem.

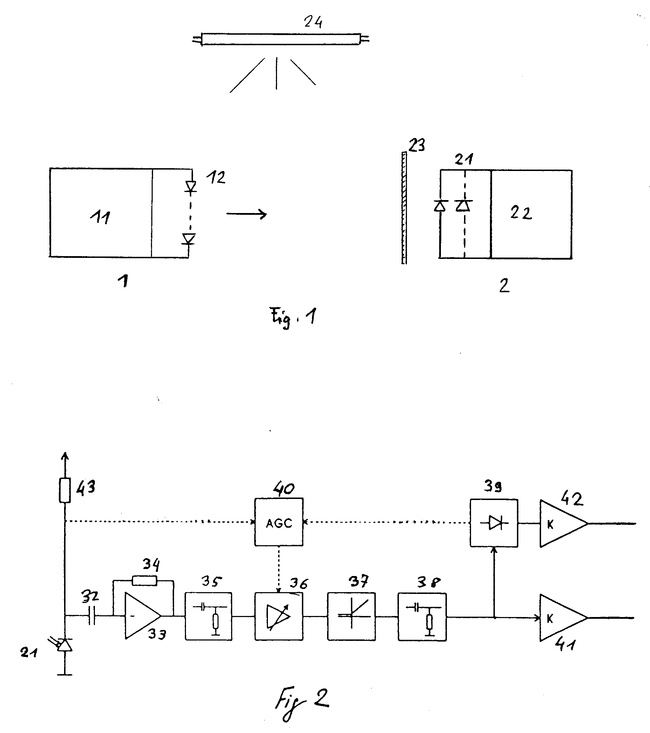

Das Übertragungssystem nach Fig.1 umfaßt eine Sendeeinrichtung 1, mit einer Steuereinheit 11 und einem Sendeelement 12, sowie eine Empfangseinrichtung 2 mit einem Empfangselement 21 und einer nachgeschalteten Empfangsschaltung 22.

Das Sendeelement 12 ist aus handelsüblichen LED-Sendedioden aufgebaut, die eine dominante Emissionswellenlänge von 950 nm aufweisen.
Als Alternative zu LED-Sendedioden sind Freiraumlaserdiode mit eingebautem Diffusor denkbar, die aufgrund ihres hohen Wirkungsgrades und ihrer Schnelligkeit verbesserte Systemeigenschaften mit sich bringen.

Das Empfangselement 21 besteht aus einer oder mehreren parallelgeschalteten Siliziumdioden mit Tageslichtfilter, denen ein Plättchen 23 aus Galliumarsenid als Halbleiterfilter vorgelagert ist. Der Photostrom des Empfangselementes wird der Empfangsschaltung 22 zugeführt, die eine Hochpaß- und Regelcharakteristik aufweist. Als Störquelle ist eine Leuchtstofflampe 24 dargestellt.

Die in Fig. 2 dargestellte Empfangsschaltung umfaßt eine mit einem Plättchen aus Galliumarsenid abgedeckte Siliziumempfangsdiode 21, an deren Kathode über einen Kondensator 32 ein Transimpedanzverstärker 33 mit einem Transimpedanz-widerstand 34 und ein Fußpunktwiderstand 43 angeschlossen sind, wobei der zweite Anschluß des Fußpunktwiderstandes an die positive Betriebsspannung ange-schlossen ist, und weiters eine Verbindung von der Empfangsdiode 21 zum Summierpunkt 40 der Steuerspannung für den Regelverstärker 36.

Weiterhin ist einen Hochpaß 35 vorgesehen, der zwischen den Ausgang des Transimpedanzverstärkers 33 und den Eingang eines Regelverstärkers 36 mit automatischer Regelung geschaltet ist, eine Begrenzerstufe 37 am Ausgang des Regelverstärkers 36, der ein weiterer Hochpaß 38 nachgeschaltet ist, eine Gleichrichterschaltung 39, die zwischen den weiteren Hochpaß 38 und den Summierpunkt der Steuerspannung für den Regelverstärker 36 geschaltet ist, sowie einen ersten Komparator 41, der an weiteren Hochpaß angeschlossen ist, und einen zweiten Komparator 42, der mit der Gleichrichterschaltung 39 verbunden ist.

Die Funktion der Schaltung ist wie folgt:
Die einfallenden Infrarotsignale, die durch das Halbleiterfilter weitgehend von hochfrequenten Störung durch das Umlicht befreit sind, werden durch die Empfangsdiode 31 in einen elektrischen Strom gewandelt und von dem rauschoptimierten Transimpedanzverstärker 33 in eine dem Transimpedanzwiderstand 34 proportionale Spannung gewandelt. Der Kondensator 32 unterdrückt die sehr niederfrequenten Störungen durch wechselstromgespeiste Glühlampen und verhindert eine Arbeitspunktverschiebung am Eingang des Transimpedanzverstärkers 33 durch den Spannungsabfall des Gleichstromanteils des Photostroms am Fußpunktwiderstand 43.

Über den ersten Hochpaß 35, der bereits einen Teil der niederfrequenten Störungen des Eingangssignals unterdrückt, gelangt das Signal an den Regelverstärker 36 mit einem Regelbereich von etwa 20 dB.

Bemerkt sei, daß sämtliche Stufen übersteuerungsfest sein müssen, insbesondere auch der Transimpedanzverstärker.

Der Ausgang des Regelverstärkers 36 wird einer Begrenzerschaltung 37 zugeführt, welche die durch den Hochpaß 35 verursachten Unterschwinger des durch den Hochpaß 35 differenzierten, impulsförmigen Nutzsignals beschneidet. Bei einem trägerfrequenten Übertragungsformat ist dies nicht nötig. Der weitere Hochpaß 38 dämpft zusätzlich die niederfrequenten Störanteile.

Das solcherart hochpaßgefilterte Nutzsignal gelangt an den ersten Komparator 41, der eine Amplitudenentscheidung darüber trifft, ob ein Nutzsignal vorliegt und das Vorliegen desselben durch einen Impuls am Ausgang anzeigt.

Die am Ausgang des weiteren Hochpasses 38 abzweigende Gleichrichterschaltung 39 liefert den Istwert für die automatische Verstärkungsregelung, die in den Summierpunkt 40 der Steuerspannung für den Regelverstärker 36 eingespeist wird,
und eine Spannung für einen weiteren Komparator 42, der bei genügend großer Nutzsignalamplitude ein sogenanntes Squelch-Signal für die weitere Impuls-verarbeitung abgibt. Damit wird erreicht, daß zu schwache, verrauschte Nutzimpulse nicht weiter verarbeitet werden.

Der durch den Gleichstromanteil des durch das Umlicht erzeugten Photostroms hervorgerufene Spannungsabfall am Fußpunktwiderstand 43 wirkt im Sinne einer Umlichtsteuerung auf den Summierpunkt 40 der Steuerspannung für den Regelverstärker 36 derart, daß bei zu großem Umlicht die Verstärkung desselben zurückgenommen wird, um zu verhindern, daß die mit dem Umlicht gekoppelten Rauschsignale als Nutzsignale interpretiert werden.

Die angeführte Schaltung kann mit besonders geringem Stromverbrauch realisiert werden. Bei einem Labormuster betrug dieser 1,5 mA.

Bei einem trägerfrequenten System ist der Aufbau der Empfangsschaltung analog zu der hier dargestellten Empfangsschaltung für Impuls-Übertragungssysteme, anstatt der elektrischen Hochpässe sind allerdings entsprechende Bandpässe vorzusehen.

## Patentansprüche

1. Übertragungssystem mit einer optischen Übertragungsstrecke im Freiraum, welche zumindest jeweils ein Sende- und Empfangselement umfaßt, **dadurch gekennzeichnet**, daß in die optische Übertragungs-strecke zur Unterdrückung der Umlichtstörungen vor das zumindest eine Empfangselement (21) ein Halbleiterfilter (23) eingefügt ist.

2. Übertragungssystem nach Anspruch 1, **dadurch gekennzeichnet**, daß als Sendeelement (12) ein Freiraum-Laser vorgesehen ist.

3. Übertragungssystem nach Anspruch 1 oder 2, **dadurch gekennzeichnet**, daß die optische Übertragungsstrecke als Infrarotübertragungsstrecke für Impulse oder trägerfrequente Signale ausgeführt ist, wobei das vom Sendeelement (12) emittierte Infrarotlicht eine dominante Wellenlänge größer als 900 nm aufweist.

4. Übertragungssystem nach Anspruch 3, **dadurch gekennzeichnet**, daß das Halbleiterfilter (23) eine Grenzwellenlänge kleiner als die dominante Wellenlänge des Sendeelementes (12) besitzt.

5. Übertragungssystem nach Anspruch 4, **dadurch gekennzeichnet**, daß Sendeelemente (12) mit einer dominanten Wellenlänge von ca. 950 nm vorgesehen sind und das Halbleiterfilter (23) aus Galliumarsenid oder Indiumphosphid aufgebaut ist.

6. Übertragungssystem nach Anspruch 4, **dadurch gekennzeichnet**, daß Sendeelemente (12) mit einer dominanten Wellenlänge größer als 950 nm vorgesehen sind und die Halbleiterfilter (23) entweder aus Galliumarsenid, oder aus Indiumphosphid, oder aus Silizium oder aus einem ternären oder quaternären Halbleitermaterial aufgebaut sind.

7. Übertragungssystem nach einem der Ansprüche 1 bis 6, **dadurch gekennzeichnet**, daß die Halbleiterfilter (23) in Form eines Plättchens im Übertragungsweg unmittelbar vor den Empfangselementen ( 21) angebracht sind oder direkt auf den Empfangselementen (21) als Halbleiterschicht aufgebracht sind.

8. Übertragungssystem nach einem der Ansprüche 1 bis 7, **dadurch gekennzeichnet**, daß den Empfangselementen (23) eine Empfangsschaltung (22) nachgeschaltet ist, welche zumindest einen Hochpaß umfaßt (35, 38).

9. Übertragungssystem nach Anspruch 8, **dadurch gekennzeichnet**, daß in der Empfangsschaltung (22) ein Regelverstärker (36) und eine Gleichrichterschaltung (39) in der Weise vorgesehen sind, daß an dem Regeleingang des Regelverstärkers (36) die gleichgerichteten Nutzsignale und die an einem Fußpunktwiderstand (43) anstehende mittlere Gleichspannung anliegen.

10. Übertragungssystem nach einem der Ansprüche 8 oder 9, **dadurch gekennzeichnet**, daß die Übertragungsstrecke als Impulsübertragungsstrecke ausgeführt ist und eine Begrenzerschaltung (37) vorgesehen ist.

11. Übertragungssystem nach einem der Ansprüche 8 bis 10, **dadurch gekennzeichnet**, daß ein erster Komparator (41) zur Bewertung des Nutzsignales vorgesehen ist, und daß ein zweiter Komparator (42) zur Erzeugung eines Steuersignales für die Bewertung der Nutzsignalamplitude vorgesehen ist.

12. Übertragungssystem nach einem der Ansprüche 1 bis 11, **dadurch gekennzeichnet**, daß die Übertragungsstrecke als Impuls-Übertragungsstrecke ausgeführt ist und ein Transimpedanzverstärker (33) dem zumindest einen Empfangselement (21) nachgeschaltet ist.

13. Übertragungssystem nach einem der Ansprüche 12, **dadurch gekennzeichnet**, daß zwischen dem zumindest einen Empfangselement (21) und dem nachgeschalteten Transimpedanzverstärker (33) ein Kondensator (32) eingefügt ist.
